# EUROPEAN PATENT APPLICATION

(11) **EP 0 892 342 A2**
(43) Date of publication of application: **20.01.1999**
(21) Application number: 98112555.2
(22) Date of filing: 07.07.1998
(51) Int. Cl.: G06F 9/44

(54) **Electronic control unit**

(30) Priority: 18.07.1997 JP 194627/97
(71) Applicant: Denso Corporation, Kariya-city, Aichi-pref., 448-8661 (JP)
(72) Inventor: Shibata, Kenji, Kariya-city, Aichi-pref., 448-8661 (JP); Kajioka, Shigeru, Kariya-city, Aichi-pref., 448-8661 (JP)
(74) Representative: Tiedtke, Harro, Dipl.-Ing.

(57) **Abstract**

An electronic control unit capable of performing processing an object-oriented program to control a control target in real time without consuming large memory resources. When a message is issued by execution of a method of an object, the message is stored (queued) in an object-message storing portion (12). At a point in time when execution of the method of some object has ended, message-delivery processing is executed. When the message has been stored in the object-message storing portion (S210: YES), an earlier-stored message is read (S220), and there is a shift to execution of the method of the object which is the output destination of this message (S240 and S250). As a result thereof, the methods of the several objects can be executed in real time with minimal storage memory requirements.

## Description

### [DETAILED DESCRIPTION OF THE INVENTION]

### [Technical Field of the Invention]

The present invention relates to an electronic control unit that controls a control target in accordance with an object-oriented program.

### [Related Art]

Conventionally, in an electronic control unit that controls, for example, a vehicle engine, a program for engine-control executed by a microcomputer is devised for each type of control. For example, a program has been devised for each type of control relating to fuel-injection control, such as ordinary injection control synchronized to engine revolution speed, injection control asynchronous with engine revolution speed, or fuel cutoff control during high revolution.

However, because a program is devised for each control, numerous common portions are contained in each program. Thus, memory resources are unnecessarily wasted, and program development time is increased. For example, in the case of the above-described fuel-injection control, in the programs for each respective control, a processing portion for driving an injector (fuel-injection valve) is redundantly provided. Additionally, because the numerous common portions of the respective programs exist, in a case where control specifications relating to these common portions must be changed, it is necessary to locate among the several programs the programs requiring the changed-specification portions, thereby increasing program development time.

In view of the above, the object-oriented control program of the present invention has been developed for an automotive electronic control unit.

The term "object-oriented" refers to a way of thinking in which a job is caused to progress with attention on an operation target, similarly to when a human acts, and is modeled in a computer system. With object-oriented programming, processing of a program is considered in units which are termed "objects".

That is to say, an object is a software module uniting data and a program to process the data. With object-oriented programming, all functions of a control program are subdivided into each unit function for each component or the like, and an object is provided for each of these unit functions. Accordingly, with object-oriented programming, a way of thinking known as inter-object message communication is utilized to link respective objects to perform exchange of messages between objects.

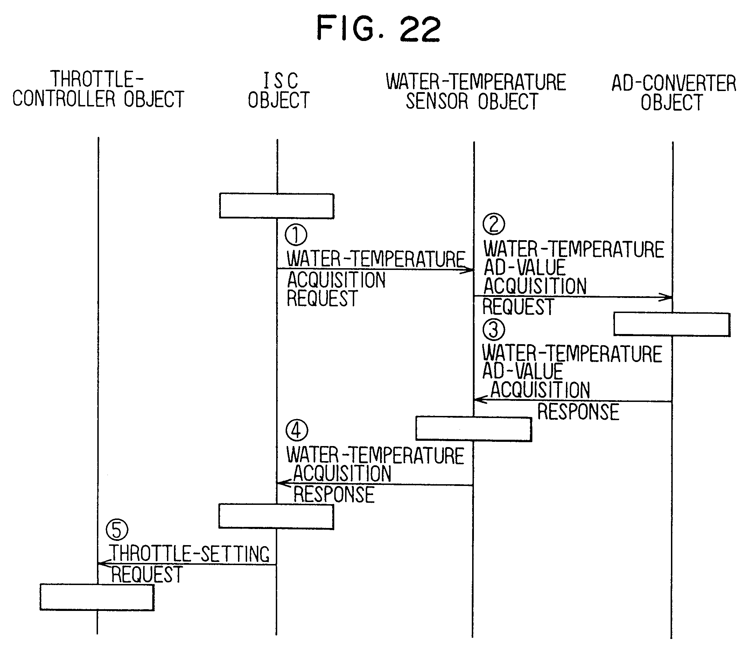

Herein, a program for controlling idle speed of an engine will be described using FIG. 22 with regard to an example of a case where devised on an object-oriented basis.

Further, FIG. 22 is a message sequence chart indicating subdivision and objectization of functions relating to idle-speed control of an engine, with exchange of messages between respective objects added thereto. Accordingly, in this message sequence chart, an object is indicated by a vertical line, and exchange of messages between these objects is indicated by a horizontal arrow. Additionally, an oblong frame on a line indicating an object represents processing of that object.

Meanwhile, in the description of the present specification, operative expressions which make an object a grammatical subject, such as "an object does..." and "the object does...", in actuality refer to matters wherein functional means (i.e., unit-processing means in the present invention) realized by operation of a microcomputer CPU (stated another way, execution of a method of an object by the CPU) in accordance with an object perform the operation of the foregoing "...". Further, "an object operates" refers a microprocessor CPU executing a method of this object.

Firstly, the functioning of the respective objects indicated in FIG. 22 will be described.

An ISC object is an object that calculates a target throttle opening degree for causing engine speed to be an optimal idle speed on a basis of engine water temperature or the like. A water-temperature sensor object is an object that converts an analog signal from a water-temperature sensor for detecting water temperature of an engine and AD-converted to a digital value to a water-temperature value. Accordingly, an AD-converter object is an object that controls an AD converter for converting an analog signal from a water-temperature sensor to a digital value, and a throttle-controller object is an object that controls a throttle valve of an engine so as to assume the target throttle opening degree calculated by the ISC object.

Next, the content of processing realized by the respective objects in FIG. 22 will be described.

Firstly, when idle-speed control timing is reached, the ISC object starts operation (that is, the CPU begins to execute the method of the ISC object). Accordingly, as shown in (1) of FIG. 22, the ISC object sends a water-temperature acquisition request to the water-temperature sensor object.

Thereupon, the water-temperature sensor object operates, and as shown in (2) of FIG. 22, sends a water-temperature AD-value acquisition request message to the AD-converter object. Accordingly, in accompaniment to this water-temperature AD-value acquisition request message the AD-converter object operates and performs computation to convert an analog signal from the water-temperature sensor to a digital signal.

The AD-converter object, after having completed the above-described computation, sends a water-temperature AD-value acquisition response message (that is, a message indicating that digital conversion of the water-temperature sensor has been completed) to the water-temperature sensor object, as shown in (3) of FIG. 22.

Thereupon, the water-temperature sensor object calculates a water-temperature value on a basis of the computational result of the AD-converter object, and subsequently to this calculation, sends a water-temperature acquisition response message (that is, a message indicating that calculation of the water-temperature value has been completed) to the ISC object, as shown in (4) of FIG. 22.

Accordingly, in accompaniment to the above-described water-temperature acquisition response message, the ISC object calculates a target throttle opening degree on a basis of the above-described calculated water-temperature value. Subsequent to this calculation, the ISC object sends a throttle-setting request message (that is, a message indicating that calculation of the target throttle opening degree has been completed) to the throttle-controller object, as shown in (5) of FIG. 22.

Thereupon, the throttle-controller object operates and controls the throttle valve of the engine so as to assume the above-described calculated target throttle opening degree, and engine speed is controlled to an optimal idle speed.

In this way, with an object-oriented program, a processing sequence of respective objects is determined through virtual inter-object message communication wherein due to the respective objects issuing a message to another object as a processing request, the object which is the output destination of that message operates.

Accordingly, when programs are devised by object orientation, common portions of the programs come to be easily grouped, and revision of the programs becomes extremely easy compared with a case where a program is devised for each control, even when a control specification changes.

### [Problems to Be Solved by the Invention]

However, in an electronic control unit of this type, even when a control program with object orientation was attempted to be devised, there existed no effective means to cause exchange of messages among the respective objects (i.e., inter-object message communication) to be realized.

Application of a conventionally known flag-check method and function-call method in inter-object message communication has been considered, but large drawbacks exist in both methods as will be described hereinafter.

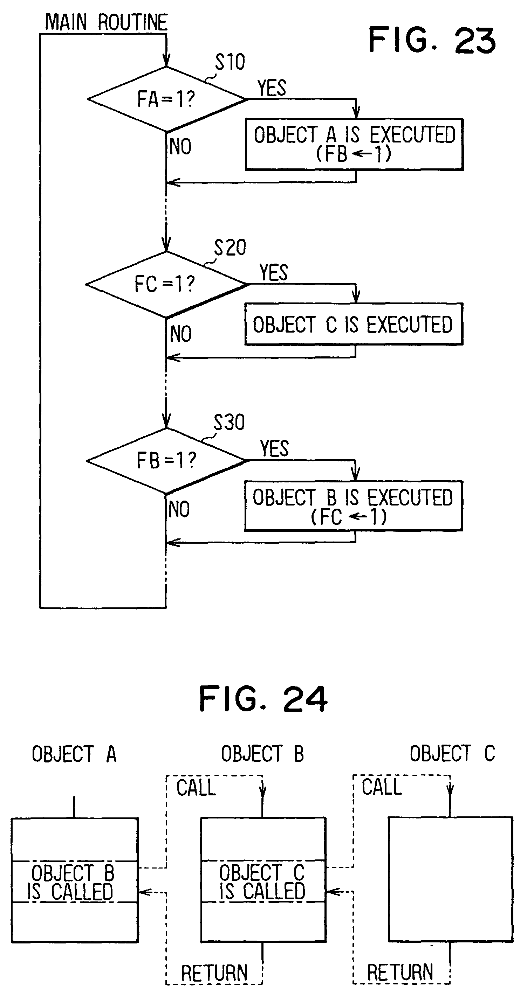

Firstly, with a method utilizing a flag, as shown in FIG. 23, an infinite-loop main routine is provided. In this main routine, determination is made as to whether a flag has been set for respective objects. Accordingly, in a case where it is determined that the flag has been set, processing of the object corresponding to this flag (that is, the method of this object) is executed. In a case where it is determined that the flag has not been set, processing of the object corresponding to this flag is skipped, and determination of the subsequent flag is performed.

Specifically, as is exemplified in FIG. 23, in a case where flags FA, FB, and FC corresponding respectively to several objects A, B, and C have not been set, negative determinations are made in all steps (hereinafter denoted simply "S") 10 through S30 of the main routine (S10 through S30: NO). Accordingly, processing for the object A is started, and, when the flag FB corresponding to the object B is set in this processing (FB <- 1), the processing for the object A ends. When thereafter in S30 of the main routine the flag FB is determined to have been set (S30: YES), the processing for the object B is executed. Additionally, when the flag FC corresponding to the object C is set in the processing for the object B (FC <- 1), the processing for the object B ends, and when thereafter in S20 of the main routine the flag FC is determined to have been set (S20: YES), the processing for the object C is executed.

That is to say, with this method, a message is issued to another object as a processing request by setting flags during processing of respective objects.

However, with the above-described method, the monitoring sequence for the flags is determined at the time of program design. In order to perform processing for one object, a flag corresponding to a different object must be determined, thereby resulting in unnecessary processing. For example, in the example of FIG. 23, in a case of performing the processing for the object B subsequent to the object A, the need arises to perform excess processing in S10 to S30 of the main routine. Moreover, the dotted lines in FIG. 23 indicate the further existence of processing for determining flags corresponding to other objects aside from the objects A through C.

Briefly, in a case of a method employing flags, processing for the respective objects cannot be performed in an event-driven manner (i.e., triggering of operation by a processing request having been issued or ended), and realtime performance is lacking.

Next, with a method employing function calls, as shown in FIG. 24, an instruction to call a method of an object to be subsequently processed is written in an object method. Accordingly, in a case where inter-object message communication is to be successively performed, the instruction to call the other object method is priorly written in the called object method.

Specifically, as is exemplified in FIG. 24, the method of the object B is called during execution of the method of the object A, and furthermore, the method of the object C is called during execution of the method of the object B.

That is to say, with this method, a message comes to be issued to another object as a processing request by a function call.

However, with the above-described method employing a function call, the method on the calling side is temporarily suspended, and after the method on the called side has been executed, execution of the method which was suspended is resumed. Therefore, in order to resume execution of the method which was suspended, the internal state of the microcomputer (i.e., the values of the program counter and various registers) immediately priorly to suspension must be stored in a stack area of RAM, consuming a large amount of storage area of RAM.

In particular, the larger the number of nestings (i.e., combinations of calls composed of multiple hierarchical levels) becomes, the markedly greater the consumed storage area of RAM becomes. Such a method is therefore undesirable, as a limit exists in a device, such as an ECU, wherein memory resources are restricted.

### [Summary of the Invention]

The present invention has been devised in light of problems such as those described above. It is an object thereof to provide an electronic control unit capable of performing processing of respective objects of a program subdivided into each unit function, to control a control target in real time without consuming large memory resources.

An electronic control unit according to the present invention includes a plurality of unit processors that respectively perform processing, in accordance with an object of a program subdivided into each unit function for controlling a control target, to realize the respective unit functions.

Herein, the unit-processors are functional means realized by operation of a microcomputer CPU (stated another way, method execution of an object by the CPU), such as that described above. That is to say, by the CPU executing a method of an object, the processing for realizing the function allocated to this object is performed.

Accordingly, with an electronic control unit according to the present invention, as a presupposition therefor, any one of the plurality of unit-processors selectively performs a processing task, and together therewith, by the unit-processor issuing a message as a processing request to another unit-processor presently engaged in the processing task.

Herein, in particular, an electronic control unit (ECU) according to the present invention stores a message issued by the unit processor in a predetermined object message storage location. The ECU also reads a stored message at a time when any one of the plurality of unit-processors has completed a processing task, and causes the message destination unit-processor to commence processing.

Accordingly, when any one of the unit-processors commences a processing operation and, during the processing operation, issues a message to another unit-processor, the issued message is stored. Accordingly, when the processing operation of the unit-processor which issued the message ends, the unit-processor which is the destination of the stored message is initiated.

Thus, when the object sends a message to another object, the message is stored once. When processing of the object which issued the message ends, processing of the object which is the output destination of the above-described message is immediately performed.

Consequently, according to the electronic control unit of the present invention, processing of respective objects of a program each subdivided into a unit function for controlling a control target can be performed in real time. That is to say, processing of the respective objects can be performed in an event-driven manner with no lack of realtime performance, similarly to a case wherein a flag-check method is applied in inter-object message communication.

Moreover, because the present invention is not a device wherein processing of an object being executed is suspended as processing of another object is performed, as in a case wherein a function-call method has been applied in inter-object message communication, the processing of the respective objects can be performed without consuming large memory resources.

That is to say, in a case wherein a function-call method has been applied in inter-object message communication, the internal state of the microcomputer (i.e., the values of the program counter and various registers) must be stored, as was described above. However, according to the electronic control unit of the present invention, it is sufficient to store solely the message, thereby reducing the amount of information that must be stored.

As an incidental comment, when the ECU control function is structured so as to read a stored message, and to cause the unit-processor that is an output destination for the read message to commence processing, and to delete the stored read message, messages which have become unnecessary can be prevented from remaining as stored messages. Therefore, memory resources can be utilized effectively.

Next, an electronic control unit according to the present invention is structured to store a plurality of messages issued to the unit-processors. Accordingly, the ECU reads a message stored first among messages stored at a time when any one of the plurality of unit-processors has completed a processing task, and causes unit-processors being an output destination for this read message to commence processing, together with deleting the stored read message.

According to such an electronic control unit, processing of a plurality of series can be performed in an alternating manner with favorable efficiency.

For example, let it be assumed that any one of the unit-processors, during the course of processing thereof, has issued a message mx1 to another unit-processor X1, and has also issued a message my1 to another unit-processor Y1 of a differing processing series.

Thereupon, the two messages mx1 and my1 are stored, in output sequence thereof (i.e., in the sequence of mx1 -> my1), in the ECU.

Accordingly, when the processing operation of the unit-processors which issued the above-described messages mx1 and my1 ends, at that time the message mx1 stored first among the messages mx1 and my1 stored in the unit-processors is read, and processing of the unit-processors X1 which is the output destination of this message mx1 is started. Also, this read message mx1 is deleted from the ECU after it is read.

Herein, when the unit-processor X1, during the course of processing thereof, issues a message mx2 to another unit-processor X2, this message mx2 is stored, and so the two messages my1 and mx2 come to be stored in the sequence of my1 -> mx2.

Therefore, when the processing operation of the unit-processor X1 ends, the message my1 stored first among the messages my1 and mx2 stored in the unit-processor is read, processing of the unit-processor Y1 which is the output destination of this message my1 is started, and the read message my1 is deleted.

Accordingly, when the unit-processor Y1, during the course of processing thereof, issues a message my2 to another unit-processor Y2, this message my2 is stored, and so the two messages mx2 and my2 are stored in the sequence of mx2 -> my2.

Thereafter, when the processing operation of the unit-processor Y1 ends, at that time the message mx2 stored first among the messages mx2 and my2 stored in the unit-processor is read, processing of the unit-processor X2 which is the output destination of this message mx2 is started, and the read message mx2 is deleted.

Accordingly, further, when the processing operation of the unit-processor X2 ends, at that time the message my2 stored in the unit-processor is read, processing of the unit-processor Y2 which is the output destination of this message my2 is started, and the read message my2 is deleted.

In this way, in a case where processing of two series is caused to proceed, such as wherein the unit-processor X1 issues a message to the unit-processor X2, and the unit-processor Y1 issues a message to the unit-processor Y2, it becomes possible to perform the processing series of the unit-processors X1 and X2 and the processing series of the unit-processors Y1 and Y2 in an alternating manner in the sequence of X1 -> Y1 -> X2 -> Y2.

As an incidental comment, in an electronic control unit of this type, although an object generally is stored in an ordinary ROM wherein rewriting of stored contents is impossible (known as a mask ROM), an EEPROM wherein rewriting of stored contents is possible may also be used.

That is to say, in an electronic control unit of the present invention, the object is stored in a predetermined location in the ECU. Included in the message issued to the respective unit-processor is an identification code indicating an object corresponding to the unit-processor that is an output destination of this message.

Accordingly, the controller is provided with a storage location to store the foregoing identification code and storage-location information indicating a storage location of an object indicated by this identification code, and is structured so as to cause the unit-processor that is an output destination for the foregoing read message to commence processing by specifying, on a basis of stored content, an ECU storage location of an object indicated by an identification code included in a message read from the ECU storage location.

According to such an electronic control unit, in a case where a storage location of an object has been changed by revising the object corresponding to a program design change, accommodation thereof becomes possible merely by changing information stored in the ECU storage-location, that is, storage-location information of the object stored with association with an identification code.

For example, in a case wherein a function-call method has been applied in inter-object message communication, objects calling an object for which the storage location has changed also must all be revised. However, according to the electronic control unit of the present invention, such an inconvenience may be avoided. That is to say, independence of respective objects throughout entire the program becomes higher, and design change as an overall system is facilitated.

Further, it is sufficient to employ an address indicating a memory region of the ECU program-storage location as the above-mentioned storage-location information. When done in this way, the storage location of an object can easily be specified. Additionally, for example, in a case where the ECU program-storage location is made up of a plurality of ROMs, it is sufficient to employ information such as which ROM and which address as the storage-location information for an object.

### [BRIEF DESCRIPTION OF THE DRAWINGS]

FIG. 1 is a block diagram of the hardware structure of an electronic control unit (ECU) of an embodiment of the present invention;
FIG. 2 is a conceptual diagram indicating a relationship between an object and a message-delivery controller for engine-controlling use;
FIG. 3 is a message sequence chart that describes a processing overview of several objects for controlling idle speed;
FIG. 4 is an explanatory diagram that describes a connection information database;
FIG. 5 is a state-transition diagram that describes state transition of the message-delivery controller;
FIG. 6 is a flow diagram indicating initialization processing of the message-delivery controller;
FIG. 7 is a flow diagram indicating serializing processing of the message-delivery controller;
FIG. 8 is a flow diagram indicating message-queuing processing of the message-delivery controller;
FIG. 9 is an explanatory diagram that explains message-queuing processing;
FIG. 10 is a flow diagram indicating message-delivery processing of the message-delivery controller;
FIG. 11 is an explanatory diagram that describes message-delivery processing;
FIG. 12 is an explanatory diagram that describes an object for controlling idle speed of an engine and a specific embodiment of a connection information database
FIG. 13 is a flow diagram indicating schedule processing executed periodically to determine timing of idle-speed control;
FIG. 14 is a flow diagram indicating an idling-time throttle-setting start-request method of an ISC object;
FIG. 15 is a flow diagram indicating a water-temperature acquisition response method of the ISC object;
FIG. 16 is a flow diagram indicating an engine-speed acquisition response method; of the ISC object;
FIG. 17 is a flow diagram indicating a water-temperature acquisition request method of a water-temperature sensor object;
FIG. 18 is a flow diagram indicating a water-temperature AD-value acquisition response method of the water-temperature sensor object;
FIG. 19 is a flow diagram indicating a water-temperature AD-value acquisition request method of an AD-converter object;
FIG. 20 is a flow diagram indicating a throttle-setting request method of a throttle-controller object;
FIG. 21 is a flow diagram indicating an engine-speed acquisition request method of a crank-sensor object;
FIG. 22 is a message sequence chart that describes an example of a program devised by an object-oriented approach;
FIG. 23 is an explanatory diagram that describes a problem in a case wherein a flag-check method is applied in inter-object message communication; and
FIG. 24 is an explanatory diagram that describes a problem in a case wherein a function-call method is applied in inter-object message communication.

### [Preferred Embodiment of the Invention]

An embodiment of an electronic control unit wherein the present invention is applied will be described hereinafter with reference to the drawings. The present invention is not exclusively restricted to the embodiment described below, but needless to say can employ various modes as long as they fall within the technical scope of the present invention.

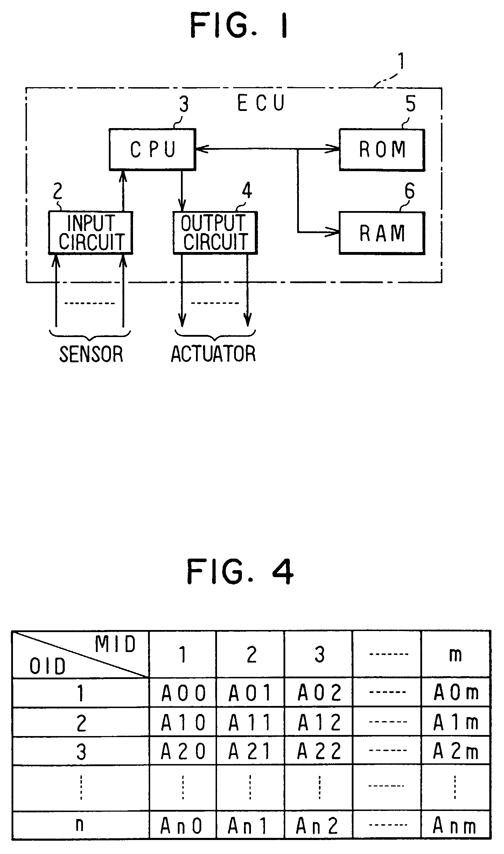

Firstly, FIG. 1 is a block diagram indicating the hardware structure of an electronic control unit (hereinafter "ECU") 1 that performs control of an automobile internal combustion engine.

As shown in FIG. 1, the ECU 1 is provided with an input circuit 2 to input signals from various sensors, such as a water-temperature sensor, to detect the water temperature of the engine, and a crank sensor to detect the speed of the engine. A CPU 3 computes an optimal control quantity for the engine on a basis of the signals from the input circuit 2 and outputs control signals on a basis of computational results thereof. An output circuit 4 receives control signals from the CPU 3 and drives the armature of a throttle valve, injector (fuel-injection valve), or the like of the engine. A nonvolatile ROM 5 stores a program which the CPU 3 executes to control the engine and data referenced during execution of this program. A volatile RAM 6 temporarily stores computational results and the like of the CPU 3.

Accordingly, in this ECU 1, the major portions of a microcomputer are structured by the foregoing CPU 3, ROM 5, and RAM 6. Although not illustrated, an I/O port allows the CPU 3 to perform input and output of signals between the input circuit 2 and the output circuit 4. Additionally, a memory region of a portion of the RAM 6 is established as backup RAM wherein memory contents are holdable even in a state where electrical power supply to the ECU 1 has been interrupted.

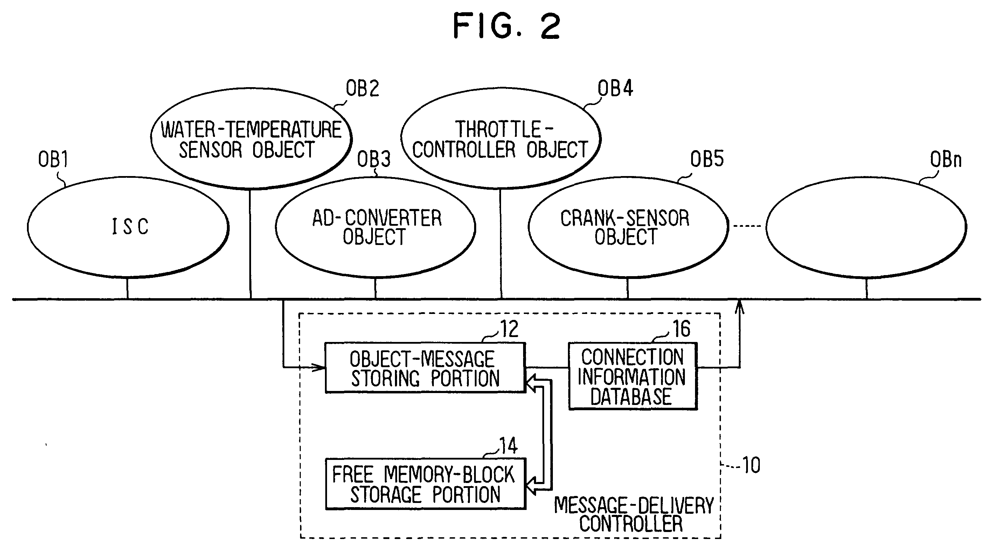

Also, in the ECU 1 according to the present embodiment, a program, and associated data, for engine-controlling use stored in the ROM 5 and executed by the CPU 3 are programmed in an object-oriented manner. For this reason, with the ECU 1 according to the present embodiment, a message-delivery controller 10 indicated in FIG. 2 is provided for realizing the above-described inter-object message communication.

Additionally, FIG. 2 does not illustrate hardware structure, but rather is a conceptual diagram indicating the relationship between an object for engine-controlling use stored in the ROM 5 and the message-delivery controller 10. Accordingly, the message-delivery controller 10 is not structured by hardware, but is functional means realized by operation of the CPU 3 according to an object for message-delivery controlling use stored in the ROM 5.

In this regard, the message-delivery controller 10 will be described hereinafter, taking a program portion for controlling idle speed of the engine as an example.

Firstly, as shown in FIG. 2, an ISC object OB1 to calculate a target throttle opening degree for causing engine speed to assume an optimal idle speed on a basis of the engine's water-temperature value, actual speed, or the like, a water-temperature sensor object OB2 to convert to a water-temperature value an analog signal from the water-temperature sensor AD-converted to a digital value, an AD-converter object OB3 to control an AD converter (not illustrated) for converting (AD-converting) an analog signal from the water-temperature sensor to a digital value, a crank-sensor object OB5 to calculate engine speed on a basis of a signal from the crank sensor, and a throttle-controller object OB4 to control the throttle valve of the engine so as to assume the target throttle opening degree calculated by the ISC object, are stored in the ROM 5 as objects for controlling idle speed of the engine.

Additionally, objects other than the above-described objects OB1 through OB5 also are stored in the ROM 5, and include an object for realizing functioning of the message-delivery controller 10 (an object for message-delivery controlling use).

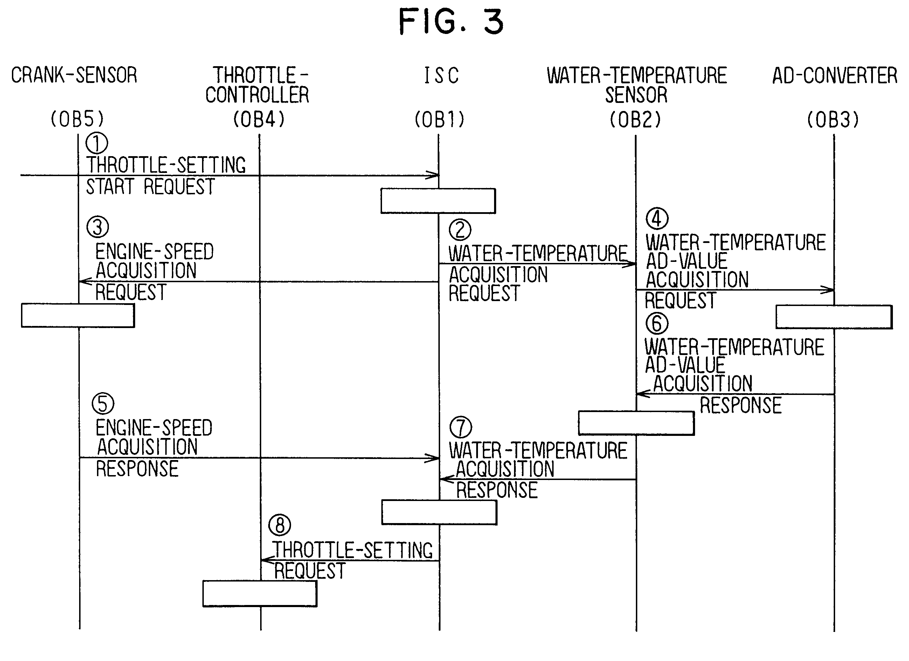

Next, an overview of processing realized by the above-described objects OB1 through OB5 will be described with reference to the message sequence chart of FIG. 3.

Firstly, when a throttle-setting start-request message is issued to the ISC object OB1 from an object other than the above-described objects OB1 through OB5, which are executed periodically (for example every 4 ms) to determine the timing of idle speed control, as shown in (1) of FIG. 3, the ISC object OB1 starts operation (that is, the CPU 3 begins to execute the method of the ISC object OB1).

Accordingly, the ISC object OB1, as shown in (2) of FIG. 3, issues a water-temperature acquisition-request message to the water-temperature sensor object OB2, and subsequently, as shown in (3) of FIG. 3, issues an engine-speed acquisition-request message to the crank-sensor object OB5.

Thereupon, in accompaniment to the above-described water-temperature acquisition request message, the water-temperature sensor object OB2 operates, and as shown in (4) of FIG. 3, issues a water-temperature AD-value acquisition request message to the AD-converter object OB3.

Meanwhile, in accompaniment to the above-described engine-speed acquisition request message, the crank-sensor object OB5 operates and calculates engine speed on a basis of a signal from the crank sensor. Accordingly, the crank-sensor object OB5, after having ended calculation of engine speed, issues an engine-speed acquisition response message (that is, a message indicating that calculation of engine speed has been completed) to the ISC object OB1, as shown in (5) of FIG. 3.

Additionally, in accompaniment to this water-temperature AD-value acquisition request message, the AD-converter object OB3 operates and performs computation to convert an analog signal from the water-temperature sensor to a digital signal. Accordingly, the AD-converter object OB3, after having completed the above-described computation, issues a water-temperature AD-value acquisition response message (that is, a message indicating that digital conversion of the water-temperature sensor has been completed) to the water-temperature sensor object OB2, as shown in (6) of FIG. 3.

Thereupon, the water-temperature sensor object OB2 calculates a water-temperature value on a basis of the computational result of the AD-converter object OB3, and subsequent to this calculation, as shown in (7) of FIG. 3, issues a water-temperature acquisition response message (that is, a message indicating that calculation of the water-temperature value has been completed) to the ISC object OB1.

Accordingly, in accompaniment to the above-described water-temperature acquisition response message or the above-described engine-speed acquisition response message, the ISC object OB1 calculates a target throttle opening degree on a basis of the water-temperature value calculated by the water-temperature sensor object OB2 and the engine speed calculated by the crank-sensor object OB5. Subsequent to this calculation, the ISC object OB1, as shown in (8) of FIG. 3, issues a throttle-setting request message (that is, a message indicating that the target throttle opening degree has been calculated) to the throttle-controller object OB4.

Thereupon, the throttle-controller object OB4 operates and controls the throttle valve of the engine so as to assume the above-described calculated target throttle opening degree, and owing thereto, engine speed is controlled to an optimal idle speed.

In this way, with the ECU 1 according to the present embodiment, a processing sequence of the respective objects OB1 through OB5 is determined through virtual inter-object message communication wherein, due to the respective objects OB1 through OB5 issuing messages to another object as a processing request, the object which is the output destination of that message operates.

Next, the message-delivery controller 10 for realizing inter-object message communication such as was described above queues the messages issued by the respective objects, and together therewith, each time a predetermined delivery condition is fulfilled, reads the firstly queued message among the above-described queued message and delivers this read message to the object which is the output destination of the message in question.

Further, "queuing" is an operation to perform insertion and storage of data in a queue, and a "queue" is a wait matrix wherein insertion of data is performed at one end in a data structure, and deletion of data is performed at the other end. Additionally, "delivery" signifies the start of processing (to go into greater detail, execution of a method of an object specified by a message) of an object which is an output destination of a message.

Accordingly, the message-delivery controller 10, as shown in FIG. 2, is provided with an object-message storing portion 12 for queuing messages from the several objects and a free memory-block storage portion 14 to provide to this object-message storing portion 12 a memory block for storing (queuing) messages.

Herein, the object-message storing portion 12 and the free memory-block storage portion 14 are memory regions in the RAM 6, and the content thereof varies dynamically. Additionally, a memory block corresponds to a unit quantity of the two storage portions 12 and 14, and is a quantity in which one message is storable.

That is to say, memory blocks of a predetermined number (for example 10) are reserved in the RAM 6, and initially, all memory blocks thereof become the free memory-block storage portion 14. Accordingly, when a message is issued from an object, the memory blocks making up the free memory-block storage portion 14 are reduced by one. In return, the memory blocks making up the object-message storing portion 12 are increased by one, and the message is stored (queued) in this increased memory block. Additionally, when a message is read from the object-message storing portion 12 and delivered to an object, the memory block from which this message was read is caused to return from the object-message storing portion 12 to the free memory-block storage portion 14.

Therefore, conceptually, all memory blocks reserved in the RAM 6 initially are placed in the free memory-block storage portion 14, one memory block is given (transferred) to the object-message storing portion 12 from the free memory-block storage portion 14, and a message is stored in this given memory block. Additionally, when a message queued in the object-message storing portion 12 is read and delivered to an object, the memory block where this message was stored is returned to the free memory-block storage portion 14 from the object-message storing portion 12 and reused.

Further, hereinafter, a memory block wherein a message has been stored is termed a message block, and a memory block wherein a message has not been stored is termed a free memory block. Accordingly, message blocks and free memory blocks are collectively termed memory blocks.

Meanwhile, in the present embodiment, a message issued from the several objects includes, as the message contents thereof, an object identification number (hereinafter termed an OID) indicating the object of the output destination of the message in question, and a method identification number (hereinafter termed MID) indicating the method to be executed among the methods composing the object of the output destination thereof, and may in some cases include additional messaging.

Accordingly, the message-delivery controller 10 is provided with a connection information database 16 as shown in FIG. 2, in order to specify the delivery destination of the message read from the object-message storing portion 12, or, stated differently, in order to specify at which address of the ROM 5 the method of the object indicated by the OID and the MID included in the read message is stored.

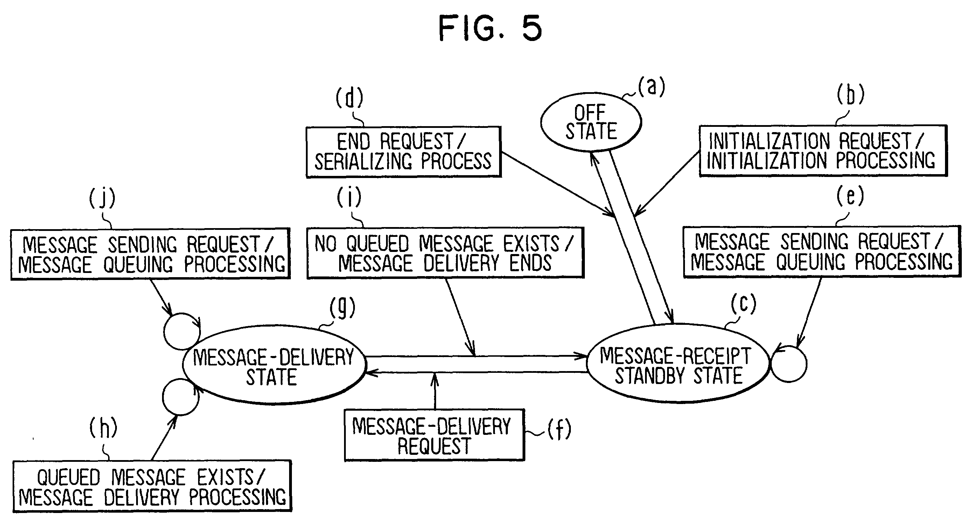

As shown in FIG. 4, this connection information database 16 is made up of a data table associating and storing respective combinations of OIDs and MIDs and start addresses (i.e., execution-start addresses) in the ROM 5 whereat the methods of the objects indicated by these combinations are stored. For example, it is indicated that with the data table of FIG. 4, the method of the object for which the OID is n and the MID is m is stored in the ROM 5 with the address, namely "Anm," at the start. Accordingly, the connection information database 16 made up of such a data table is priorly stored in the ROM 5 together with the several objects.

Next, state transition and functioning of the message-delivery controller 10 will be described with reference to FIG. 5. Further, FIG. 5 is a state-transition diagram of the message-delivery controller 10. Additionally, processing of the message-delivery controller 10 which will be described hereinafter is, in actuality, realized by operation of the CPU 3 in accordance with the object (method and data) for message-delivery controlling use stored in the ROM 5.

The message-delivery controller 10 assumes an off state as indicated in FIG. 5 (a) at a time when an ignition switch of a vehicle has been switched off and the microcomputer of the ECU 1 has stopped operation. Accordingly, when for example the ignition switch is switched on from the off state and an initialization request is generated wherein a reset or the like is applied to the microcomputer, initialization processing is performed as shown in FIG. 5 (b), and thereafter, a message-receipt standby state is assumed as shown in FIG. 5 (c).

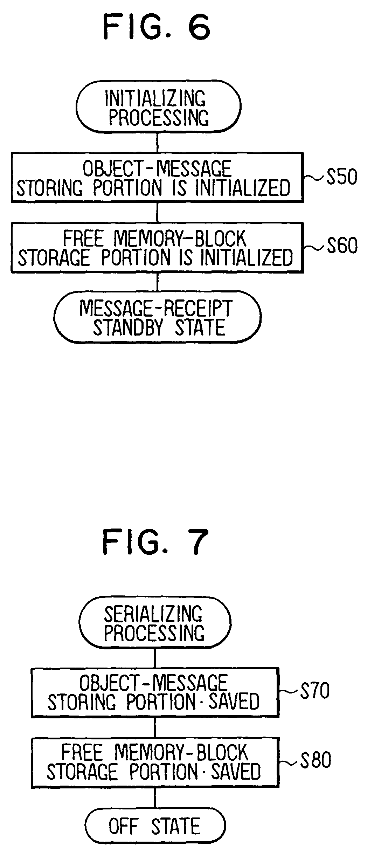

Herein, in the initialization processing performed in FIG. 5 (b), as shown in FIG. 6, firstly at S50, the object-message storing portion 12 is initialized. Specifically, the free memory blocks which the object-message storing portion 12 retains are given to the free memory-block storage portion 14. Subsequently, at S60, the free memory-block storage portion 14 is initialized. Specifically, when a message has been issued from any one of the objects, a state is assumed wherein the free memory blocks which the free memory-block storage portion 14 retains can be given to the object-message storing portion 12.

Accordingly, the message-delivery controller 10, after having completed such initialization processing, assumes a message-receipt standby state.

The message-receipt standby state is a state wherein a message read from an object can be queued in the object-message storing portion 12, and in this state, when an end request of the ignition switch being switched off or the like is generated, the message-delivery controller 10 performs serializing processing as shown in FIG. 5 (d), and thereafter returns to the above-described off state.

Herein, in the serializing processing performed in FIG. 5 (d), as shown in FIG. 7, firstly at S70 the data stored in the object-message storing portion 12 is caused to be saved in the above-described backup RAM. Subsequently at S80, the data stored in the free memory-block storage portion 14 is saved in the backup RAM. Accordingly, the message-delivery controller 10, after having completed such serializing processing, assumes an off state.

Meanwhile, the message-delivery controller 10 performs message-queuing processing as shown in FIG. 5 (e) when a message is issued from an object while in the message-receipt standby state by queuing the message from the above-mentioned object in the object-message storing portion 12, and thereafter assuming the message-receipt standby state.

Further, with the present embodiment, message output is performed by an object issuing a message-sending request. Accordingly, in the description hereinafter, a message wherein the OID is n (= 1, 2,...) and the MID is m (= 1, 2,...) as the message contents denotes in particular as "message (n, m)," and a message-sending request for outputting this message (n, m) is denoted as "message-sending request (n, m)."

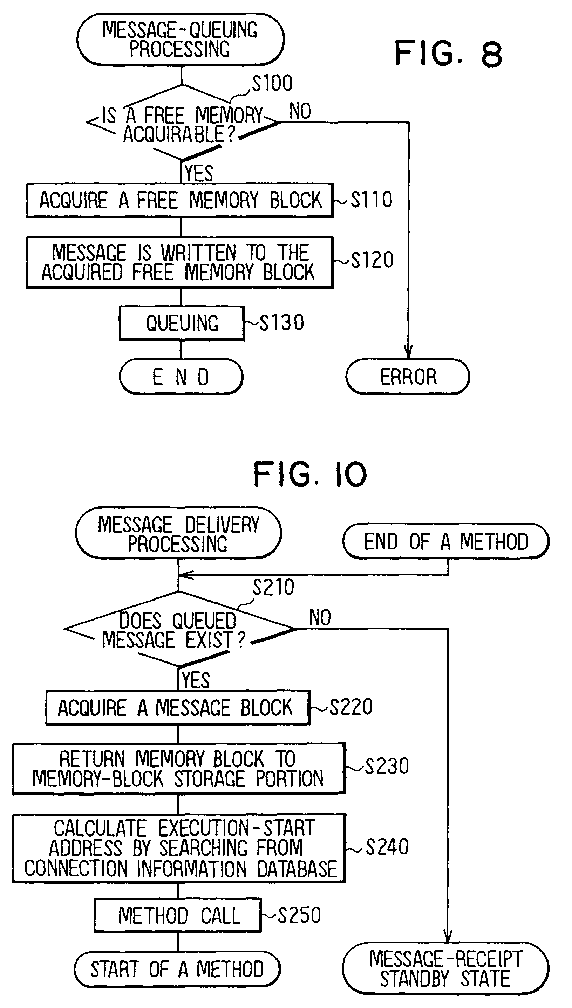

Herein, in the message-queuing processing performed when an object has issued a message (message-sending request), as shown in FIG. 8, firstly at S100, it is determined whether a free memory block can be acquired from the free memory-block storage portion 14 (that is, whether a free memory block exists in the free memory-block storage portion 14). Accordingly, when a free memory block is acquirable, at S110, a free memory block existing at the start among the free memory blocks, that is, the initially queued free memory block among the free memory blocks queued in the free memory-block storage portion 14, is acquired from the free memory-block storage portion 14.

Subsequently, at S120, the message that has now been issued from the object is written to the above-mentioned acquired free memory block. Further, specifically, the OID and the MID which are the contents of the message and, alternativley, further messaging, are written to the free memory block.

Accordingly, at S130, the memory block to which the message was written at S120 is queued in the object-message storing portion 12. That is to say, the memory block to which the message was written is recorded as a message block at the final tail of the message blocks in the object-message storing portion 12. Accordingly, after the processing of S130 has been performed, the relevant message-queuing processing is ended.

Additionally, at S100, in a case where it has been determined that a free memory block cannot be acquired (that is, when a free memory block does not exist in the free memory-block storage portion 14), an error message is issued to the object which issued the message-sending request, and predetermined failsafe processing is performed.

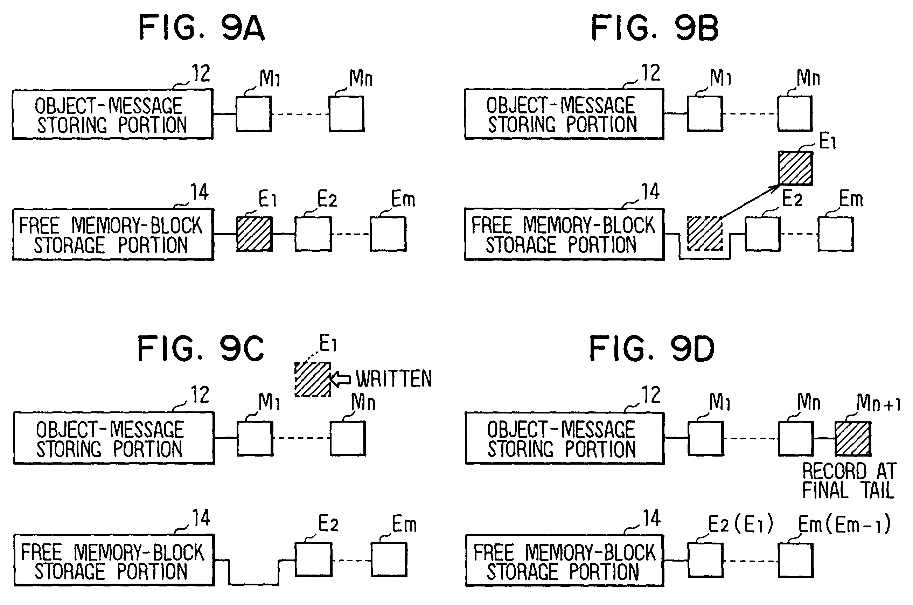

Therefore, when this message-queuing processing is performed, as shown by slanted lines in FIG. 9 (a), a free memory block E1 existing at the beginning among free memory blocks E1 through Em existing in the free memory-block storage portion 14 is selected, and as shown in FIG. 9 (b), this free memory block E1 is acquired (S100: YES, S110).

Accordingly, as shown in FIG. 9 (c), the message that has now been issued from the object is written to the above-mentioned acquired free memory block E1 (S120). Finally, as shown in FIG. 9 (d), the memory block E1 to which the contents of the message have been written is recorded as message block Mn+1 at the final tail of the messages blocks M1 through Mn in the object-message storing portion 12 (S130), and the queuing of the message to the object-message storing portion 12 ends.

Additionally, in this state, as shown in FIG. 9 (d), the message blocks M of the object-message storing portion 12 are increased by one, and in return, the free memory blocks E of the object-message storing portion 12 come to be reduced by one. Accordingly, as is shown within "()" in FIG. 9 (d), the free memory block E2 which was originally second in the free memory-block storage portion 14 becomes the starting free memory block E1, and the free memory block Em which was originally mth becomes the m-1th free memory block Em-1.

Meanwhile, subsequently, when a message-delivery request is issued from an object as shown in FIG. 5 (h), the message-delivery controller 10 in the message-receipt standby state assumes a message-delivery state as shown in FIG. 5 (f).

In the message-delivery state, as shown in FIG. 5 (h), when a queued message exists in the object-message storing portion 12, message-delivery processing, which will be described later, is performed. Also, delivery of this queued message (that is, execution of the method of the object specified by the message) is performed, and, as shown in FIG. 5 (i), when no queued message exists in the object-message storing portion 12, the message-receipt standby state is resumed.

Additionally, in the message-delivery state, when a message-sending request is issued from an object in the process of being executed, the message-queuing processing of the above-described FIG. 8 is performed as shown in FIG. 5 (j), similarly to a case of the message-receipt standby state.

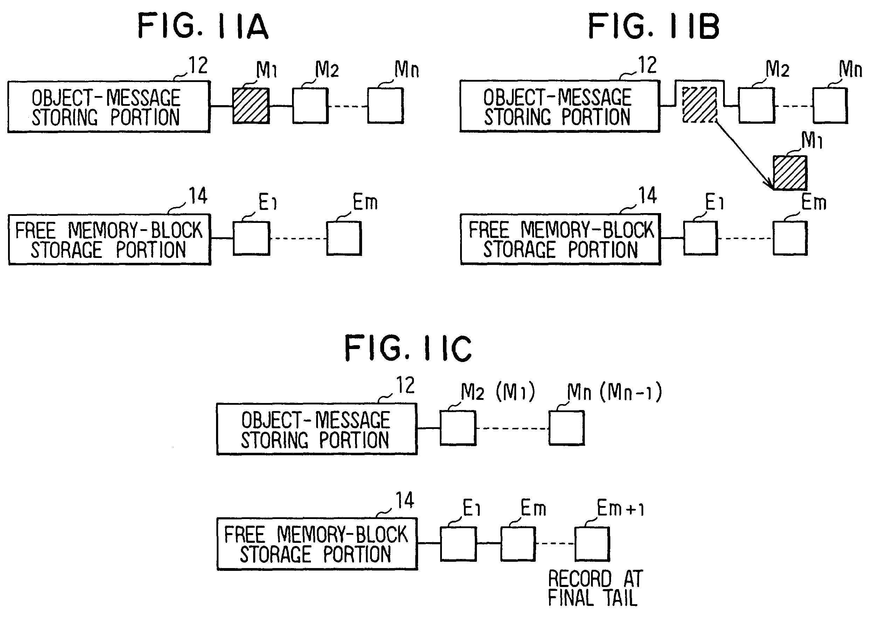

Herein, as shown in FIG. 10, the message-delivery processing is performed at a time when a message-delivery request has been issued from an object, or at a time when execution of a method of some object has ended. First, at S210, it is determined whether a queued message exists in the object-message storing portion 12 (that is, whether a message block can be acquired from the object-message storing portion 12). Accordingly, when a queued message exists, at S220, the message block existing at the beginning among the message blocks, that is, the message block queued firstly among the message blocks queued in the object-message storing portion 12, is acquired from the object-message storing portion 12, and the contents (OID and MID) of the message written to this message block are read.

Subsequently, at S230, the message block acquired at S220 is recorded as a free message block at the final tail of the free messages blocks in the free memory-block storage portion 14.

Accordingly, at S240, the start address (the execution-start address) in the ROM 5 whereat the method of the object corresponding to the OID and the MID acquired at S220 is stored, is calculated by searching from the above-described connection information database 16. At S250, the execution-start address calculated in the foregoing S240 is called.

Thereupon, the execution destination of the program by the CPU 3 shifts to the start of the method of the corresponding message object contents acquired at S220, and delivery of the message is performed. Accordingly, when processing execution of this method ends, the message-delivery processing is again performed from S210.

Meanwhile, when it is determined at S210 that a queued message does not exist in the object-message storing portion 12 (that is, that a message block cannot be acquired from the object-message storing portion 12), a return to the message-receipt standby state is effected without further processing.

Accordingly, when this message-delivery processing is performed, the message block M1 at the start is selected from among the message blocks M1 through Mn existing in the object-message storing portion 12, as shown by slanted lines in FIG. 11 (a). Accordingly, as shown in FIG. 11 (b), this message block M1 is acquired, and the message contents written to this message block M1 are read (S210: YES, S220).

Accordingly, further, as shown in FIG. 11 (c), the message block M1 is recorded as free memory block Em+1 at the final tail of the free memory blocks E1 through Em in the free memory-block storage portion 14 (S230) after the message contents have been read therefrom. Together therewith, execution of the method of the object corresponding to the message contents acquired from the above-described message block M1 is initiated.

Additionally, in this state, as shown in FIG. 11 (c), the free memory blocks E of the free memory-block storage portion 14 are increased by one. In return, the free memory blocks E of the object-message storing portion 12 are reduced by one. Accordingly, as is shown within "()" in FIG. 11 (c), the message block M2 which was originally second in the object-message storing portion 12 becomes the starting message block M1, and the message block Mn which was originally nth becomes the n-1th message block Mn-1.

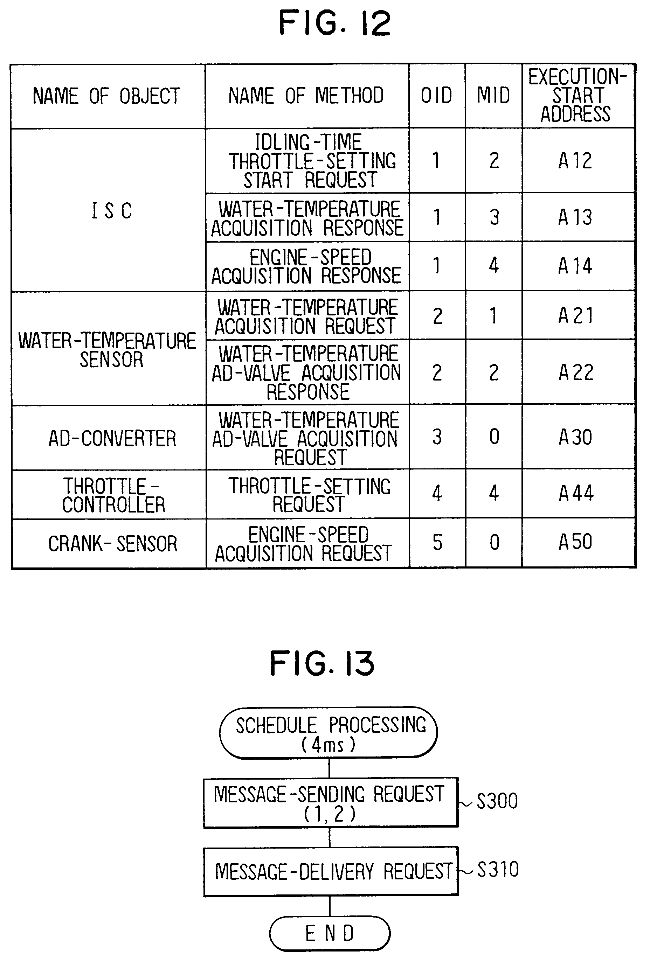

Next, how the respective objects OB1 through OB5 for idle-speed controlling use indicated in FIG. 2 perform inter-object message communication by action of the message-delivery controller 10, and how the operation indicated in the message sequence chart of FIG. 3 is performed, will be described in specific terms utilizing FIG. 12 through FIG. 21.

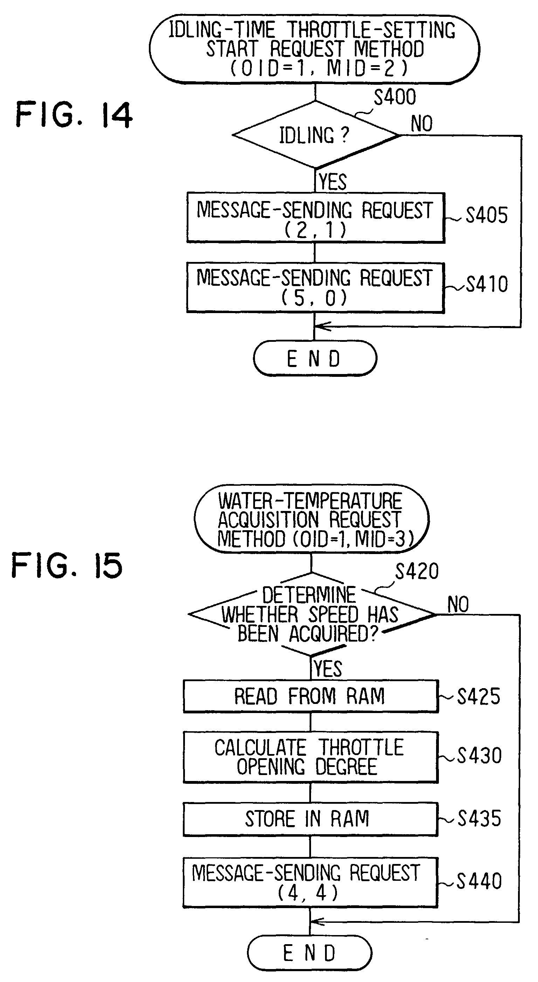

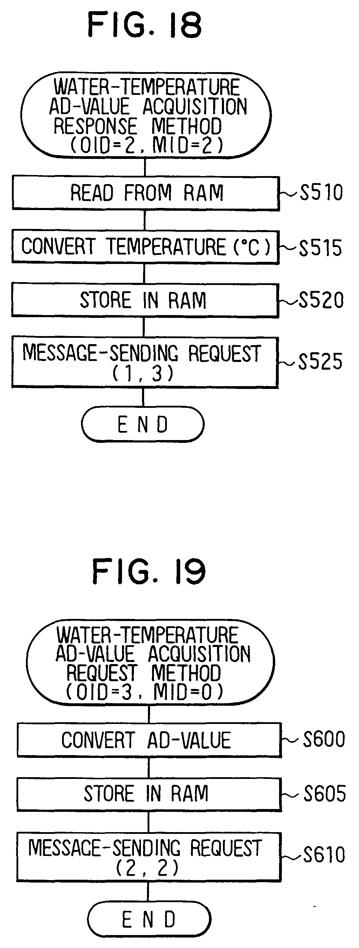

Initially, as shown in FIG. 12, the ISC object OB1 is provided with an idling-time throttle-setting start-request method (FIG. 14) executed in accompaniment with a message (1, 2) as the throttle-setting start-request message indicated in (1) of FIG. 3, a water-temperature acquisition response method (FIG. 15) executed in accompaniment with a message (1, 3) as the water-temperature acquisition response message indicated in (7) of FIG. 3, and an engine-speed acquisition response method (FIG. 19) executed in accompaniment with a message (1, 4) as the water-temperature acquisition response message indicated in (5) of FIG. 3.

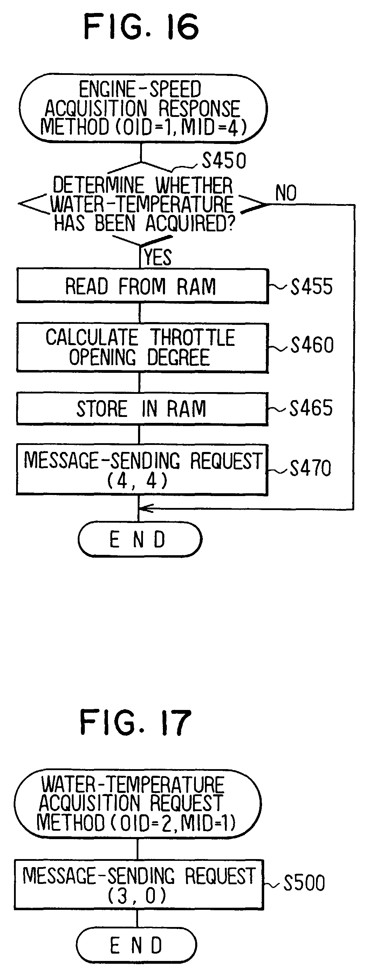

Additionally, the water-temperature sensor object OB2 is provided with a water-temperature acquisition-request method (FIG. 17) executed in accompaniment with a message (2, 1) as the water-temperature acquisition-request message indicated in (2) of FIG. 3, and a water-temperature AD-value acquisition response method (FIG. 18) executed in accompaniment with a message (2, 2) as the water-temperature AD-value acquisition response message indicated in (6) of FIG. 3.

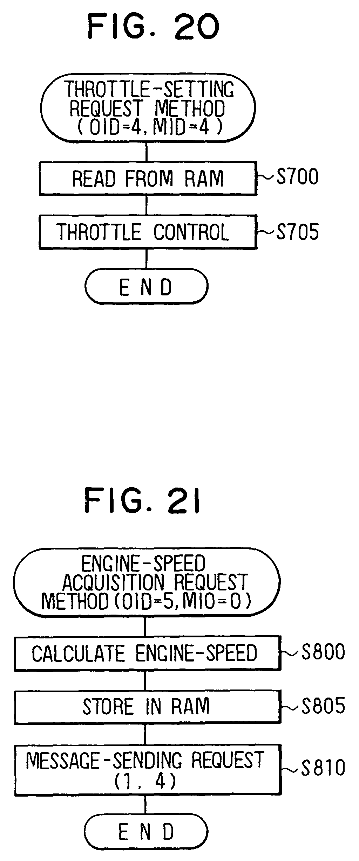

Additionally, the AD-converter object OB3 is provided with a water-temperature AD-value acquisition request method (FIG. 19) executed in accompaniment with a message (3, 0) as the water-temperature AD-value acquisition request message indicated in (4) of FIG. 3. Further, the throttle-controller object OB4 is provided with a throttle-setting request method (FIG. 20) executed in accompaniment with a message (4, 4) as the throttle-setting request message indicated in (8) of FIG. 3. Also, the crank-sensor object OB5 is provided with an engine-speed acquisition request method (FIG. 21) executed in accompaniment with a message (5, 0) as the engine-speed acquisition request message indicated in (3) of FIG. 3.

Accordingly, the execution-start addresses of the respective methods of the foregoing objects OB1 through OB5 are initially recorded within the connection information database 16, in correspondence with the OIDs and MIDs indicating the several methods, as shown in FIG. 12.

Details of operation executed by the CPU 3 will be described next.

First, the schedule processing of FIG. 13, being an object other than the foregoing objects OB1 through OB5, and which is processing of an object in order to determine timing of idle-speed control, is executed every 4 ms. Further, in the description hereinafter, at a time when this schedule processing is executed, it is assumed that no free memory block exists in the object-message storing portion 12. Additionally, a sufficient number of free memory blocks exists in the free memory-block storage portion 14, and at S100 of the message-queuing processing indicated in FIG. 8, an affirmative determination is always assumed.

As shown in FIG. 13, when execution of schedule processing is started, at S300, a message-sending request (1, 2) is issued.

Thereupon, the message-queuing processing of the above-described FIG. 8 is executed, and the message (1, 2) is queued in the object-message storing portion 12.

That is to say, at S110 of FIG. 8, the starting free memory block is acquired from the free memory-block storage portion 14. At S120, the message (1, 2) is written to this acquired free memory block. Further, at S130, the memory block to which the message (1, 2) has been written is recorded as a message block in the object-message storing portion 12. Accordingly, in this case, only one message block to which the message (1, 2) has been written comes to be recorded in the object-message storing portion 12. Stated differently, only one message (1, 2) is stored in the object-message storing portion 12.

When queuing of the message (1, 2) ends in this way, execution of processing returns to the schedule processing of FIG. 13, and at S310 of FIG. 13, a message-delivery request is issued.

Thereupon, the message-delivery processing of the above-described FIG. 10 is executed, and the message (1, 2) queued in the object-message storing portion 12 is delivered.

That is to say, at S210 of FIG. 10, it is determined whether a message has been queued in the object-message storing portion 12. However, because solely the message (1, 2) has been queued, at S220, the contents of the message (1, 2) are read from the message block existing at the start in the object-message storing portion 12. Additionally, at S230, the message block to which the message (1, 2) has been written is returned to the free memory-block storage portion 14 as a free memory block.

Accordingly, at S240 of FIG. 10, an execution-start address A12 (refer to FIG. 12) of the idling-time throttle-setting start-request method of the ISC object OB1 corresponding to the contents of the above-described read message (1, 2) is calculated from the connection information database 16. At S250, this calculated execution-start address is called.

Through this, delivery of the message (1, 2) is performed, and execution of the idling-time throttle-setting start-request method indicated in FIG. 14 is initiated.

As shown in FIG. 14, when execution of the idling-time throttle-setting start-request method is initiated, first at S400, it is determined whether idling is in progress, that is, whether the engine is in an idle-running state.

Accordingly, when the engine is not in an idling state, execution of the method is ended as it stands, and execution of processing returns to the schedule processing of FIG. 13. In accompaniment therewith, all processing ends. However, during idling, at subsequent S405, a message-sending request (2, 1) is issued.

Thereupon, the message-queuing processing of FIG. 8 is executed, and the message (2, 1) is queued in the object-message storing portion 12.

That is to say, at S110 of FIG. 8, the starting free memory block is acquired from the free memory-block storage portion 14. At S120, the message (2, 1) is written to this acquired free memory block. Further, at S130, the memory block to which the message (2, 1) has been written is recorded as a message block in the object-message storing portion 12. Accordingly, in this case, only one message block to which the message (2, 1) has been written comes to be recorded in the object-message storing portion 12. Stated differently, only one message (2, 1) is stored in the object-message storing portion 12.

When queuing of the message (2, 1) ends in this way, execution of processing returns to the idling-time throttle-setting start-request method of FIG. 14, and at s410 of FIG. 14, a message-sending request (5, 0) is issued.

Thereupon, again, the message-queuing processing of FIG. 8 is executed, and the message (5, 0) is queued in the object-message storing portion 12.

That is to say, at S110 of FIG. 8, the starting free memory block is acquired from the free memory-block storage portion 14, and at S120, the message (5, 0) is written to this acquired free memory block. Further, at S130, the memory block to which the message (5, 0) has been written is recorded as a message block at the end (in this case the second from the start)) in the message blocks in the object-message storing portion 12.

Accordingly, in this case, both the message block to which the message (2, 1) has been written and the message block to which the message (5, 0) has been written come to be recorded in this sequence in the object-message storing portion 12. Stated differently, the two messages are stored in the object-message storing portion 12 in the sequence of message (2, 1) -> message (5, 0).

When queuing of the message (5, 0) ends in this way, execution of processing returns to the idling-time throttle-setting start-request method of FIG. 14. Accordingly, when processing of this idling-time throttle-setting start-request method ends, the message-delivery processing of FIG. 10 is executed, and of the two messages queued in the object-message storing portion 12, the first-stored message (2, 1) is delivered.

That is to say, at S220 of FIG. 10, the contents of the message (2, 1) are read from the message block existing at the start in the object-message storing portion 12. Additionally, at S230, the message block to which the message (2, 1) has been written is returned to the free memory-block storage portion 14 as a free memory block. Accordingly, at S240, an execution-start address A21 (refer to FIG. 12) of the water-temperature acquisition request method of the water-temperature sensor object OB2 corresponding to the contents of the above-described read message (2, 1) is calculated from the connection information database 16. At S250, this calculated execution-start address is called.

Through this, delivery of the message (2, 1) is performed, and execution of the water-temperature acquisition request method indicated in FIG. 17 is initiated.

As shown in FIG. 17, when execution of the water-temperature acquisition request method is started, at S500, a message-sending request (3, 0) is issued.

Thereupon, the message-queuing processing of FIG. 8 is executed, and the message (3, 0) is queued in the object-message storing portion 12. Accordingly, in this case, both the message block to which the message (5, 0) has been written and the message block to which the message (3, 0) has been written come to be recorded in this sequence in the object-message storing portion 12. Stated differently, the two messages are stored in the object-message storing portion 12 in the sequence of message (5, 0) -> message (3, 0).

When queuing of the message (3, 0) ends in this way, execution of processing returns to the water-temperature acquisition request method of FIG. 17. Accordingly, when processing of this water-temperature acquisition request method ends, the message-delivery processing of FIG. 10 is executed, and of the two messages queued in the object-message storing portion 12, the first-stored message (5, 0) is delivered.

That is to say, at S220 of FIG. 10, the contents of the message (5, 0) are read from the message block existing at the start in the object-message storing portion 12. Additionally, at S230, the message block to which the message (5, 0) has been written is returned to the free memory-block storage portion 14 as a free memory block. Accordingly, at S240, an execution-start address A50 (refer to FIG. 12) of the engine-speed acquisition request method of the crank sensor object OB5 corresponding to the contents of the above-described read message (5, 0) is calculated from the connection information database 16. At S250, this calculated execution-start address is called.

Through this, delivery of the message (5, 0) is performed, and execution of the engine-speed acquisition request method indicated in FIG. 21 is initiated.

As shown in FIG. 21, when execution of the engine-speed acquisition request method is started, at S800, engine speed is calculated on a basis of a signal from the crank sensor. Accordingly, at S850, the engine speed calculated in the foregoing S800 is stored in the RAM 6, and at S810, a message-sending request (1, 4) is issued.

Thereupon, the message-queuing processing of FIG. 8 is executed, and the message (1, 4) is queued in the object-message storing portion 12, similarly to the steps described above. Accordingly, in this case, both the message block to which the message (3, 0) has been written and the message block to which the message (1, 4) has been written come to be recorded in this sequence in the object-message storing portion 12. Stated differently, the two messages are stored in the object-message storing portion 12 in the sequence of message (3, 0) -> message (1, 4).

When queuing of the message (1, 4) ends in this way, execution of processing returns to the engine-speed acquisition request method of FIG. 21. Accordingly, when processing of this engine-speed acquisition request method ends, the message-delivery processing of FIG. 10 is executed, and of the two messages queued in the object-message storing portion 12, the first-stored message (3, 0) is delivered.

That is to say, at S220 of FIG. 10, the contents of the message (3, 0) are read from the message block existing at the start in the object-message storing portion 12. Additionally, at S230, the message block to which the message (3, 0) has been written is returned to the free memory-block storage portion 14 as a free memory block. Accordingly, at S240, an execution-start address A30 (refer to FIG. 12) of the water-temperature AD-value acquisition request method of the AD-converter object OB3 corresponding to the contents of the above-described read message (3, 0) is calculated from the connection information database 16. At S250, this calculated execution-start address is called.

Through this, delivery of the message (3, 0) is performed, and execution of the water-temperature AD-value acquisition request method indicated in FIG. 19 is initiated.

As shown in FIG. 19, when execution of the water-temperature AD-value acquisition request method is initiated, at S600, computation to convert an analog signal from the water-temperature sensor to a digital value is performed. At S605, the digital value computed at S600 is stored in the RAM 6. Accordingly, at S610, a message-sending request (2, 2) is issued.

Thereupon, the message-queuing processing of FIG. 8 is executed, and the message (2, 2) is queued in the object-message storing portion 12, similarly to the steps described above. Accordingly, in this case, both the message block to which the message (1, 4) has been written and the message block to which the message (2, 2) has been written come to be recorded in this sequence in the object-message storing portion 12. Stated differently, the two messages are stored in the object-message storing portion 12 in the sequence of message (1, 4) -> message (2, 2).

When queuing of the message (2, 2) ends in this way, execution of processing returns to the water-temperature AD-value acquisition request method of FIG. 19. Accordingly, when processing of this water-temperature AD-value acquisition request method ends, the message-delivery processing of FIG. 10 is executed, and of the two messages queued in the object-message storing portion 12, the first-stored message (1, 4) is delivered.

That is to say, at S220 of FIG. 10, the contents of the message (1, 4) are read from the message block existing at the start in the object-message storing portion 12. Additionally, at S230, the message block to which the message (1, 4) has been written is returned to the free memory-block storage portion 14 as a free memory block. Accordingly, at S240, an execution-start address A14 (refer to FIG. 12) of the engine-speed acquisition response method of the ISC object OB1 corresponding to the contents of the above-described read message (1, 4) is calculated from the connection information database 16. At S250, this calculated execution-start address is called.

Through this, delivery of the message (1, 4) is performed, and execution of the engine-speed acquisition response method indicated in FIG. 16 is initiated.

As shown in FIG. 16, when execution of the engine-speed acquisition response method is initiated, at S450, it is determined whether water temperature has been acquired, that is, whether the most recent water-temperature value has been stored in the RAM 6.

Herein, when hypothetical water temperature has been acquired, at S455, the most recent engine speed and water-temperature value are read from the RAM 6. At S460, a target throttle opening degree for causing the engine speed to be an optimal idle speed is calculated on a basis of the engine speed and water-temperature value read at S455. Accordingly, at S465, the target throttle opening degree calculated at S460 is stored in the RAM 6. At S470, a message-sending request (4, 4) is issued.

It may be noted that in a case of the present embodiment, the water-temperature AD-value acquisition response method of the water-temperature sensor object OB2 for storing the most recent water-temperature value in the RAM 6 has not yet been executed at this time. Thus, at S450, it is always determined that the water temperature has not been acquired, and the processing of the engine-speed acquisition response method is ended as it stands, without performing the processing of the above-described steps S455 through S470.

Accordingly, when execution of this engine-speed acquisition response method ends, the message-delivery processing of FIG. 10 is executed, and the message (2, 2) queued in the object-message storing portion 12 is delivered.

That is to say, in this case, because solely the message (2, 2) has been queued, at S220 of FIG. 10, the contents of the message (2, 2) are read from the message block existing at the start in the object-message storing portion 12. Additionally, at S230, the message block to which the message (2, 2) has been written is returned to the free memory-block storage portion 14 as a free memory block. Accordingly, at S240, an execution-start address A22 (refer to FIG. 12) of the water-temperature AD-value acquisition response method of the water-temperature sensor object OB2 corresponding to the contents of the above-described read message (2, 2) is calculated from the connection information database 16. At S250, this calculated execution-start address is called.

Through this, delivery of the message (2, 2) is performed, and execution of the water-temperature AD-value acquisition response method indicated in FIG. 18 is started.

As shown in FIG. 18, when execution of the water-temperature AD-value acquisition response method is started, at S510, the digital value stored in the RAM 6 at S605 of the water-temperature AD-value acquisition request method (FIG. 19) is read. At S515, computation to convert the digital value read at S510 to a water-temperature value (øC) is performed.

Accordingly, at S520, and S465, the water-temperature value computed at S510 is stored in the RAM 6. At S525, a message-sending request (1, 3) is issued.

Thereupon, the message-queuing processing of FIG. 8 is executed, and the message (1, 3) is queued in the object-message storing portion 12, similarly to the steps described above. Accordingly, in this case, only one message block to which the message (1, 3) has been written comes to be recorded in the object-message storing portion 12. Stated differently, only one message (1, 3) is stored in the object-message storing portion 12.

When queuing of the message (1, 3) ends in this way, execution of processing returns to the water-temperature AD-value acquisition response method of FIG. 18. Accordingly, when execution of this water-temperature AD-value acquisition response method ends, the message-delivery processing of FIG. 10 is executed, and the message (1, 3) queued in the object-message storing portion 12 is delivered.

That is to say, at S220 of FIG. 10, the contents of the message (1, 3) are read from the message block existing at the start in the object-message storing portion 12. Additionally, at S230, the message block to which the message (1, 3) has been written is returned to the free memory-block storage portion 14 as a free memory block. Accordingly, at S240, an execution-start address A13 (refer to FIG. 12) of the water-temperature acquisition response method of the ISC object OB1 corresponding to the contents of the above-described read message (1, 3) is calculated from the connection information database 16. At S250, this calculated execution-start address is called.

Through this, delivery of the message (1, 3) is performed, and execution of the water-temperature acquisition response method indicated in FIG. 15 is initiated.

As shown in FIG. 15, when execution of the water-temperature acquisition response method is initiated, at S420, it is determined whether speed has been acquired, that is, whether the most recent engine speed value has been stored in the RAM 6.

Herein, when hypothetical speed has been acquired, the water-temperature acquisition response method is ended. However, in the present embodiment, because at this point in time the most recent engine speed has been stored in the RAM 6 at S805 of the above-described engine-speed acquisition response method (FIG. 21), at S420, it is always determined that the speed has already been acquired.

Accordingly, when determined that engine speed has already been acquired, at S425, the most recent engine speed and water-temperature value are read from the RAM 6. At S430, a target throttle opening degree for causing the engine speed to be an optimal idle speed is calculated on a basis of the engine speed and water-temperature value read at S425. Accordingly, at S435, the target throttle opening degree calculated at S430 is stored in the RAM 6. At S440, a message-sending request (4, 4) is issued.

Thereupon, the message-queuing processing of FIG. 8 is executed, and the message (4, 4) is queued in the object-message storing portion 12, similarly to the steps described above. Accordingly, in this case, only one message block to which the message (4, 4) has been written comes to be recorded in the object-message storing portion 12. Stated differently, only one message (4, 4) is stored in the object-message storing portion 12.

When queuing of the message (4, 4) ends in this way, execution of processing returns to the water-temperature acquisition response method of FIG. 15. Accordingly, when execution of this water-temperature acquisition response method ends, the message-delivery processing of FIG. 10 is executed, and the message (4, 4) queued in the object-message storing portion 12 is delivered.

That is to say, at S220 of FIG. 10, the contents of the message (4, 4) are read from the message block existing at the start in the object-message storing portion 12. Additionally, at S230, the message block to which the message (4, 4) has been written is returned to the free memory-block storage portion 14 as a free memory block. Accordingly, at S240, an execution-start address A44 (refer to FIG. 12) of the throttle-setting request method of the throttle-controller object OB4 corresponding to the contents of the above-described read message (4, 4) is calculated from the connection information database 16. At S250, this calculated execution-start address is called.

Through this, delivery of the message (4, 4) is performed, and execution of the throttle-setting request method indicated in FIG. 20 is initiated.

As shown in FIG. 20, when execution of the throttle-setting request method is started, at S700, the digital value stored in the RAM 6 at S435 of the water-temperature acquisition response method (FIG. 15) is read. At S705, throttle control to adjust the opening degree of the throttle valve to the foregoing target throttle opening degree is performed. Accordingly, after the throttle control at S705 has been performed, the throttle-setting request method ends.

Thereupon, the message-delivery processing of FIG. 10 is executed, and at S210, it is checked whether a message has been queued in the object-message storing portion 12. However, in this case, no message has yet been queued, and so there is a return to the message-receipt standby state. Accordingly, there is a return to the schedule processing of FIG. 13, and concomitant with the end of this schedule processing, all processing terminates for the time being.

In the above-described manner, the methods of the several objects OB1 through OB5 are executed in the sequence of: (1) the idling-time throttle-setting start-request method (FIG. 14) of the ISC object OB1; (2) the water-temperature acquisition request method (FIG. 17) of the water-temperature sensor object OB2; (3) the engine-speed acquisition request method (FIG. 21) of the crank-sensor object OB5; (4) the water-temperature AD-value acquisition request method (FIG. 19) of the AD-converter object OB3; (5) the engine-speed acquisition response method (FIG. 16) of the ISC object OB1; (6) the water-temperature AD-value acquisition response method (FIG. 18) of the water-temperature sensor object OB2; (7) the water-temperature acquisition response method (FIG. 15) of the ISC object OB1; and (8) the throttle-setting request method (FIG. 20) of the throttle-controller object OB4. Processing for idle-speed control is performed in the sequence indicated in the message sequence chart of FIG. 3.

Herein, in particular, with the ECU 1 of the present embodiment, when a message (message-sending request) is issued by execution of an object method, the message-queuing processing of FIG. 8 is executed, and the message is stored (queued) in the object-message storing portion 12. At a point in time where execution of a method of some object has ended, the message-delivery processing of FIG. 10 is executed, the message stored in the object-message storing portion 12 is read, and there is a shift to execution of the object method which is the output destination of the read message.

For this reason, according to the ECU 1 of the present embodiment, the methods of the several objects can be executed in real time. That is to say, the methods of the respective objects can be executed in an event-driven manner with no lack of realtime performance, similar to a case wherein a flag-check method is applied in inter-object message communication.

Moreover, this is not a device wherein suspension of the method of an object being executed and execution of another method of an object is performed, as in a case wherein a function-call method has been applied in inter-object message communication. Therefore, the methods of the respective objects can be performed without consuming large memory resources. That is to say, in a case wherein a function-call method has been applied in inter-object message communication, the values of the program counter and various registers of the microcomputer must be stored. However, according to the ECU 1 of the present embodiment, it is sufficient to store solely the message, thereby substantially reducing the amount of information to be stored.

Additionally, with the ECU 1 of the present embodiment, in the message-delivery processing of FIG. 10, the message read from the object-message storing portion 12 is deleted from this object-message storing portion 12. Particularly, the memory block of the object-message storing portion 12 where the read message was stored is returned to the free memory-block storage portion 14.

For this reason, messages which have become unnecessary can be prevented from remaining within the object-message storing portion 12, and the memory regions of the RAM 6 which are the memory resources can be utilized effectively.

Furthermore, with the ECU 1 of the present embodiment, the object-message storing portion 12 is able to store a plurality of messages issued to the unit-processing means, and together therewith, in the message-delivery processing of FIG. 10, the message stored firstly among messages stored in the object-message storing portion 12 is read. Therefore, there is a shift to execution of the method of the object which is the output destination of this read message. Accordingly, the foregoing read message is deleted from the object-message storing portion 12.

For this reason, according to the ECU 1 of the present embodiment, processing of a plurality of series can be performed in an alternating manner with favorable efficiency.

That is to say, in the above-described example of idle-speed control there existed two series. One series incuded a water-temperature-related processing series made up of the water-temperature acquisition request method of the water-temperature sensor object OB2, the water-temperature AD-value acquisition request method of the AD-converter object OB3, the water-temperature AD-value acquisition response method of the water-temperature sensor object OB2, and the water-temperature acquisition response method of the ISC object OB1. Ther other series was an engine-speed-related processing series of the engine-speed acquisition request method of the crank-sensor object OB5 and the engine-speed acquisition response method of the ISC object OB1.

According to the ECU 1 of the present embodiment, as shown in the message sequence chart of FIG. 3, the methods of the foregoing two processing series can be caused to alternatingly execute (2) the water-temperature acquisition request method of the water-temperature sensor object OB2 -> (3) the engine-speed acquisition request method of the crank-sensor object OB5 -> (4) the water-temperature AD-value acquisition request method of the AD-converter object OB3 -> (5) the engine-speed acquisition response method of the ISC object OB1 -> (6) the water-temperature AD-value acquisition response method of the water-temperature sensor object OB2. In particular, advantageousness exists because a substantially simultaneous water-temperature value and engine speed can be acquired and the target throttle opening degree calculated.

Moreover, with the ECU 1 of the present embodiment, an OID (object identification number) and an MID (method identification number) are included in a message issued by execution of a method of an object as identification codes indicating the object of the output destination and the method thereof. Additionally, the ECU 1 of the present embodiment is provided with a connection information database 16 associating and storing respective combinations of OIDs and MIDs and execution-start addresses as storage-location information which is the start addresses in the ROM 5 whereat the methods of the objects indicated by these respective combinations are stored, as shown in FIG. 4.

Accordingly, in the message-delivery processing of FIG. 10, the execution-starts address of the object method corresponding to the OID and the MID of the message read from the object-message storing portion 12 is specified from stored contents of the connection information database 16. Thus, there is a shift to execution of the method of the object which is the output destination of the foregoing read message.

For this reason, even in a case where a storage location in the ROM 5 of an object has been changed by revising this object in accompaniment to a design change or the like of the program, accommodation thereof becomes possible merely by changing the contents of the connection information database 16. That is to say, independence of the respective objects is improved, and design change of the program is facilitated.

Further, according to the present embodiment, the message-queuing processing of FIG. 8 and the object-message storing portion 12 correspond to message-storing means, and the message-delivery processing of FIG. 10 corresponds to start-controlling means. Additionally, the ROM 5 and the connection information database 16 stored therein correspond to the storage-location storing means.

Meanwhile, according to the above-described embodiment, all objects were stored within the single ROM 5, but in a case where objects are stored in a plurality of ROMs, it is sufficient to cause information, such as which execution-start address of which ROM is to be stored as the storage-location information within the connection information database 16.

Additionally, the ECU 1 of the above-described embodiment was a device to control an engine of a vehicle, but the present invention can be applied similarly also in an electronic control unit to control another control target, such as, for example, an automatic transmission or suspension of a vehicle.

While the above description constitutes the preferred embodiment of the present invention, it should be appreciated that other modifications in addition to those described above may be made to the invention without departing from the proper scope or fair meaning of the accompanying claims. Various other advantages of the present invention will become apparent to those skilled in the art after having the benefit of studying the foregoing text and drawings taken in conjunction with the following claims.

An electronic control unit capable of performing processing an object-oriented program to control a control target in real time without consuming large memory resources. When a message is issued by execution of a method of an object, the message is stored (queued) in an object-message storing portion (12). At a point in time when execution of the method of some object has ended, message-delivery processing is executed. When the message has been stored in the object-message storing portion (S210: YES), an earlier-stored message is read (S220), and there is a shift to execution of the method of the object which is the output destination of this message (S240 and S250). As a result thereof, the methods of the several objects can be executed in real time with minimal storage memory requirements.

## Claims

1. An electronic control unit, comprising:
a plurality of means for unit processing (OB1-OBn) that, in accordance with an object of a program subdivided into unit functions for controlling a control target, perform processing to realize said respective unit functions, any one of said plurality of unit-processing means (OB1-Obn) being selectively initiated as a destination unit-processing means to perform a processing task after receiving a message from a source unit-processing means requesting performance of the processing task;
means for storing (10) that stores said message issued by said source unit-processing means; and
means for initializing (3) that reads said message stored in said storing means at a time when any one of said plurality of unit-processing means (OB1-Obn) has completed a processing task, and that causes said destination unit-processing means to commence the requested processing task.

2. An electronic control unit as recited in Claim 1, wherein said initializing means (3) deletes said read message from said storing means (10).

3. An electronic control unit as recited in Claim 1, wherein said storing means (10) can store a plurality of messages; and
said initializing means (3) reads an initially stored message among said plurality of stored messages stored in said storing means (10) at a time when any one of said plurality of unit-processing means (OB1-Obn) has completed a processing task, causes said destination unit-processing means to commence the requested processing task, and deletes said read message from said storing means (10).

4. An electronic control unit as recited in Claim 1, wherein said object is stored in an object storing means (10), and included in said message is an identification code indicating an object corresponding to said destination unit-processing means;
said initializing means (3) also includes a storage location for storing said identification code and storage-location information indicating a storage location in said storing means (16) of said object indicated by said identification code;
said initializing means (3) causing said destination unit-processing means to commence said processing task by specifying, on a basis of stored content of said storing means, the object storage location indicated by said identification code included in said message read from said storing means (16).

5. An electronic control unit as recited in Claim 4, wherein said storage-location information is an address indicating a memory region of said storing means (16).

6. An electronic control unit, comprising:
a central processing unit (3) that receives sensed system operating signals, and that outputs control signals generated in response to the sensed system operating signals to control a target control function;
a memory (5,6) associated with the central processing unit that includes a plurality of objects (OB1-Obn) each having at least one unit function, the plurality of objects enabling the central processing unit to control the target control function;
each of the objects being capable of communicating with other of the objects through transmission of object messages; and
the CPU (3) including a message delivery controller (10) that controls message protocol among the plurality of objects by queuing an object message with other like object messages, and delivering the object message to initiate the at least one unit function, based on predetermined controller parameters.

7. The electronic control unit of Claim 6, wherein the message delivery controller (10) comprises:
an object-message storing portion (12) that receives and stores the object message, along with the other like object messages, in a queue;
a free memory block storage portion (14) that provides memory space to the object-message storing portion in accordance with message storage requirements; and
a connection information database (16) that provides data from the message delivery controller (10) to a receiving object based on database and delivery parameters.

8. The electronic control unit of Claim 7, wherein the object-message storing portion (12) returns memory used to store the message to the free memory block storage portion (14) after the message is delivered.

9. The electronic control unit of Claim 7, further comprising a backup memory (5,6) associated with the message delivery controller (10) that stores data in the object-message storing portion (12) and the free memory block storage portion (14) when the electronic control unit receives an off state system signal.

10. The electronic control unit of Claim 9, wherein the CPU (3) serializes the data from the object-message storing portion (12) and the free memory block storage portion (14) before the data is stored in the backup memory (5,6).

11. The electronic control unit of Claim 7, wherein the object message includes object identification data that identifies the receiving object, and unit function identification data that identifies the unit function to be performed by the receiving object.

12. The electronic control unit of Claim 11, wherein the connection information database (16) includes an operation storage portion in which execution start addresses associated with predetermined combinations of the object and unit function identification data are stored.

13. The electronic control unit of Claim 7, wherein the message delivery controller (10) is operative to deliver the object message to the receiving object by calling a start address corresponding to the receiving object, and by calling unit function identification data, to initiate delivery of the object message.

14. The electronic control unit of Claim 7, wherein the plurality of objects (OB1-OBn) is operative to selectively control a plurality of target control functions.

15. The electronic control unit of Claim 7, wherein the message delivery controller (10) delivers the plurality of object messages with information in addition to the unit function information.

16. A method of controlling a control target through a plurality of objects that each selectively performs a processing task, comprising the steps of:
selectively initializing one of the plurality of objects as a sending object to request performance of a processing task;
issuing a message from the sending object that requests performance of the processing task from a receiving object;
queuing the message sent by the sending object (S130); and
delivering the queued message to the receiving object, when any one of the plurality of objects has completed a prior processing task, to cause the receiving object to initiate the requested processing task (S210-S220).

17. The method of Claim 16, further comprising the step of deleting the queued message (S230) after the step of delivering.

18. The method of Claim 16, wherein the step of queuing comprises queuing the message with a plurality of like messages issued from the plurality of objects (S130).

19. The method of Claim 18, wherein the step of delivering comprises delivering the plurality of like messages in an order based on the step of queuing (S210).

20. The method of Claim 16, wherein the step of queuing comprises the steps of:
storing the message based on object identification and task identification information contained in the message, and in an order of issuance (S120-S130); and
identifying a stored start address, corresponding to the object and task identification data (S240), to initiate the step of delivering.

21. The method of Claim 16, further comprising the step of sending a message from the receiving object to the sending object indicating completion of the requested processing task.
